(19) Europäisches Patentamt / European Patent Office / Office européen des brevets

(11) **EP 4 069 986 B1**

(12) **EUROPÄISCHE PATENTSCHRIFT**

(45) Veröffentlichungstag und Bekanntmachung des Hinweises auf die Patenterteilung:
**30.10.2024   Patentblatt 2024/44**

(21) Anmeldenummer: **20808089.5**

(22) Anmeldetag: **16.11.2020**

(51) Internationale Patentklassifikation (IPC):
*F16B 37/00* *(2006.01)*

(52) Gemeinsame Patentklassifikation (CPC):
**F16B 37/00**

(86) Internationale Anmeldenummer:
**PCT/EP2020/082262**

(87) Internationale Veröffentlichungsnummer:
**WO 2021/110397 (10.06.2021 Gazette 2021/23)**

(54) **BUCHSE MIT FREIGESTELLTEM GEWINDEABSCHNITT ZUR AUFNAHME EINES BEFESTIGUNGSELEMENTS**

BUSHING HAVING A CLEARED THREAD PORTION FOR RECEIVING A FASTENING ELEMENT

DOUILLE À PARTIE FILETÉE DÉGAGÉE PERMETTANT DE RECEVOIR UN ÉLÉMENT DE FIXATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2019   DE 102019218674**

(43) Veröffentlichungstag der Anmeldung:
**12.10.2022   Patentblatt 2022/41**

(73) Patentinhaber: EJOT SE & Co. KG
**57319 Bad Berleburg (DE)**

(72) Erfinder: **HACKLER, Erhard**
**57319 Bad Berleburg (DE)**

(74) Vertreter: **Bardehle Pagenberg Partnerschaft mbB**
**Patentanwälte Rechtsanwälte**
**Prinzregentenplatz 7**
**81675 München (DE)**

(56) Entgegenhaltungen:
EP-A1- 0 354 446      EP-B1- 0 354 446
DE-T2- 69 405 048

**Beschreibung**

Die vorliegende Erfindung betrifft im Allgemeinen eine Buchse zur Aufnahme eines Befestigungselements.

In vielen Fällen werden Befestigungselemente in einen Untergrund gesetzt. Je nach Beschaffenheit des Untergrunds ist es vorteilhaft zunächst eine Buchse in den Untergrund einzusetzen. Dadurch kann eine vorbestimmte Umgebung geschaffen werden, in die das Befestigungselement eingesetzt werden kann. Beispielsweise kann die Buchse ein Innengewinde aufweisen, in das ein Gewindeabschnitt des Befestigungselements eingedreht wird, um eine formschlüssige Verbindung zwischen dem Gewindeabschnitt des Befestigungselements und dem Innengewinde der Buchse herzustellen, wie dies von Schraubenmuttern, die beispielsweise in DE 694 05 048 T2 und EP 0 354 446 A1 beschrieben sind, bekannt ist.

Derartige Buchsen werden insbesondere auch bei der Abstandsmontage verwendet. Bei der Abstandsmontage werden beispielsweise Dämmplatten mit Hilfe eines Befestigungselements in einem bestimmten Abstand zu einem Untergrund gehalten. Hierfür kann das Befestigungselement zwei Gewindeabschnitte aufweisen, wobei ein erster Gewindeabschnitt zur Verankerung des Befestigungselements im Untergrund dient und ein zweiter Gewindeabschnitt zum Halten der Dämmplatte verwendet wird. Damit das Befestigungselement ausreichend Halt in der Dämmplatte findet und der Abstand der Dämmplatte zum Untergrund variabel eingestellt werden kann, wird häufig eine Buchse in die Dämmplatte eingesetzt. Der zweite Gewindeabschnitt des Befestigungselements kann dann in die Buchse eingreifen und eine formschlüssige Verbindung herstellen, während die Außenseite der Buchse ausgestaltet ist, um die Dämmplatte zu halten. Je nachdem wie weit der zweite Gewindeabschnitt in die Buchse hineingedreht wird, ändert sich der Abstand der Dämmplatte zum Untergrund.

Eine typische Buchse ist im Wesentlichen wie ein Hohlzylinder aufgebaut, d.h. sie weist einen Körper und eine darin angeordnete Bohrung auf, wobei an der Innenseite des Körpers eine spiralförmige Nut ausgebildet ist. Diese Nut bildet ein Innengewinde und dient der Aufnahme eines Gewindeabschnitts eines Befestigungselements. Wird das Befestigungselement in die Bohrung der Buchse eingebracht, ist das relative Auftreffen zwischen Gewindeabschnitt und Nut entscheidend für eine formschlüssige Verbindung. Typischerweise sind die Nut der Buchse und der Gewindeabschnitt des Befestigungselements eingängig. Das bedeutet das Innengewinde wird durch eine durchgängige Nut gebildet. Es ist jedoch auch möglich eine Buchse zu verwenden, deren Innengewinde mehrgängig ist, also aus mehreren voneinander getrennten aber mit einander verflochtenen spiralförmigen Nuten gebildet wird.

Im Fall eines eingängigen Innengewindes besitzt die Buchse an ihrem dem Befestigungselement zugewandten Ende einen Eingang in die Nut. Damit sich der Gewindeabschnitt in die Nut eindrehen kann, muss der Anfang des Gewindeabschnitts des Befestigungselements auf den Eingang treffen. Ein passgenaues Auftreffen des Gewindeabschnitts auf den Eingang in die Nut ist somit nur über einen geringen Winkelbereich möglich. Im Fall eines mehrgängigen Innengewindes besitzt jede der voneinander getrennten aber miteinander verflochtenen spiralförmigen Nuten einen separaten Eingang. Ein entsprechendes Befestigungselement weist in einem solchen Fall ebenfalls einen Gewindeabschnitt auf, der aus mehreren Vorsprüngen gebildet wird, die sich in je eine der voneinander getrennten Nuten des mehrgängigen Gewindes eindrehen können.

Häufig bleibt bei der Montage eines Befestigungselements nicht ausreichend Zeit, um die relative Position des Gewindeabschnitts und des Eingangs der Nut sorgfältig auszurichten. In vielen Fällen ist dies darüber hinaus nur schwer möglich, wenn beispielsweise die Sicht versperrt ist.

Daher kommt es in der Praxis häufig vor, dass der Anfang des Gewindeabschnitts des Befestigungselements bei der Montage nicht in den Eingang der Nut der Buchse eindringt. Dies kann zur Folge haben, dass das Befestigungselement nicht in die Buchse eindringt, sondern die Buchse aus der Dämmstoffplatte heraus schiebt. Darüber hinaus ist es möglich, dass der Gewindeabschnitt des Befestigungselements in die Buchse einschneidet und dadurch die Buchse beschädigt. Es besteht also die Gefahr, dass es nicht zu der vorgesehenen formschlüssigen Verbindung des Befestigungselements und der Buchse kommt.

Die Aufgabe, die sich die vorliegende Erfindung daher stellt, ist es die vorgenannten Nachteile zu überwinden und eine Buchse bereitzustellen, die ein Eindringen eines Gewindeabschnitts eines Befestigungselement in ein Innengewinde der Buchse unabhängig von der Auftreffposition des Gewindeabschnitts auf die Bohrung der Buchse verbessert.

Diese Aufgabe wird gelöst durch eine Buchse, ein System aus einer Buchse und einem Befestigungselement, sowie einem Spindelwerkzeug zur Herstellung einer erfindungsgemäßen Buchse, wie sie jeweils in den unabhängigen Ansprüchen der vorliegenden Erfindung beschrieben werden. Bevorzugte und vorteilhafte Ausgestaltungen finden sich in den abhängigen Ansprüchen und in der folgenden Beschreibung.

Auch wenn die Verwendung der Buchse in der Beschreibungseinleitung und in der folgenden detaillierten Beschreibung am Beispiel einer Abstandsmontage erläutert wird, liegt dies nur daran, weil in dem Zusammenhang das Einlaufen des Gewindeabschnitts des Befestigungselements in das Innengewinde der Buchse besonders wichtig ist und weil die Buchse in einer Dämmplatte häufig nicht so festgehalten werden kann, wie in einem gemauerten Untergrund. Nichtsdestotrotz ist die vorliegende Erfindung nicht auf derartige Anwendungen beschränkt, sondern kann in jeder Situation vorteilhaft verwendet werden, in der ein Gewinde in ein zugehöriges Innengewinde eingeführt werden soll.

Eine erfindungsgemäße Buchse weist ein Innengewinde auf, das teilweise durch eine spiralförmige Nut in der Buchse gebildet wird, wobei die Nut Begrenzungen in Richtung eines ersten und eines zweiten Endes der Buchse aufweist. Das Innengewinde kann sich in einer Bohrung der Buchse befinden. Dabei kann die Nut geeignet sein, um mit dem Vorsprung eines Gewindeabschnitts eines Befestigungselements ineinanderzugreifen und so eine formschlüssige Verbindung herzustellen.

Eine Buchse bezeichnet im Allgemeinen einen Körper mit einem Freiraum in dem etwas angeordnet werden kann. Daher wird im Zusammenhang mit der vorliegenden Erfindung auch davon gesprochen, dass die Buchse eine Bohrung aufweist, ohne damit die genaue Ausgestaltung des Freiraums oder des Verfahrens, mit dem der Freiraum gebildet wurde, zu bezeichnen. Der Freiraum kann beispielsweise zylinderförmig sein. Dem Fachmann ist aber bewusst, dass die Vorteile der vorliegenden Erfindung auch mit Freiräumen mit anderer Ausgestaltung erzielt werden können. Der Freiraum kann direkt bei der Herstellung der Buchse gebildet werden oder in einem nachfolgenden Schritt, in dem der Freiraum beispielsweise in die Buchse gebohrt wird.

Die erfindungsgemäße Buchse weist zwei Enden auf, wobei der Freiraum der Buchse von mindestens einem der beiden Enden der Buchse zugänglich ist. Dieses Ende wird im Folgenden als das erste Ende bezeichnet und dies ist auch das Ende von dem aus ein Befestigungselement bei bestimmungsgemäßer Benutzung in Richtung des zweiten Endes in den Freiraum der Buchse eindringt. Dies schließt aber nicht aus, dass ein Befestigungselement zusätzlich noch von dem zweiten Ende in den Freiraum der Buchse eindringen kann.

Bei der Nut handelt es sich grundsätzlich um eine Vertiefung oder Ausnehmung in dem Körper der Buchse ausgehend von dem Innenraum. Ausgehend von dem Boden der Nut wird die Nut in zwei Richtungen durch Vorsprünge begrenzt. Hierbei handelt es sich um eine Begrenzung in Richtung des ersten Endes und um eine Begrenzung in Richtung des zweiten Endes der Buchse. Die Begrenzungen können beispielsweise durch Gewindeflanken des Innengewindes gebildet werden. Dementsprechend haben die Begrenzungen im Allgemeinen auch eine Steigung relativ zur Längserstreckung der Buchse, die im Wesentlichen der Steigung des Innengewindes und/oder des Gewindeabschnitts des Befestigungselements entspricht. Bei den Begrenzungen handelt es sich nicht um Mittel, die die Nut an einem Ende oder an beiden Enden verschließt, weil die Nut ja derart ausgestaltet sein muss, dass der Gewindeabschnitt des Befestigungselements in die Nut gedreht werden kann.

Das Innengewinde der erfindungsgemäßen Buchse weist im Bereich eines ersten Umlaufs benachbart zum ersten Ende der Buchse eine Begrenzung in Richtung des zweiten Endes auf, aber keine Begrenzung in Richtung des ersten Endes. Die Begrenzung in Richtung des zweiten Endes kann beispielsweise durch eine Gewindeflanke des Innengewindes gebildet werden. Der Bereich des ersten Umlaufs kann unmittelbar an dem ersten Ende der Buchse beginnen. Im Rahmen der vorliegenden Erfindung kann der Bereich des ersten Umlaufs aber auch derart benachbart zum ersten Ende sein, dass sich zwischen dem ersten Ende und dem Bereich des ersten Umlaufs ein weiterer Bereich befindet. Hierbei kann es sich beispielsweise um einen Bereich ohne Begrenzungen in Richtung des ersten und des zweiten Ende handeln.

Im Rahmen der vorliegenden Erfindung bezeichnet ein Umlauf einen Gewindegang des Innengewindes. Der erste Umlauf des Innengewindes, d.h. also der erste Gewindegang des Innengewindes, ist der Umlauf, der am nächsten zum ersten Ende der Buchse angeordnet ist. Dieser erste Umlauf unterscheidet sich von den darauf folgenden Umläufen, weil der erste Umlauf keine Begrenzung in Richtung des ersten Endes aufweist. Dadurch kann der Anfang eines Gewindeabschnitts eines Befestigungselements an jeder Stelle des ersten Umlaufs auf das Innengewinde treffen. Bei der Ausgestaltung der vorliegenden Erfindung führt dies dazu, dass sich der Gewindeabschnitt des Befestigungselements an dem Innengwinde entlang bewegt, bis der Anfang des Gewindeabschnitts in den zweiten Umlauf eindringt, in dem das Innengewinde in beide Richtungen begrenzt wird. Vorteilhaft hat das Innengewinde der Buchse dafür die gleiche oder eine ähnliche Steigung wie der Gewindeabschnitt des einzubringenden Befestigungselements.

Im Vergleich mit einer bekannten Buchse zeichnet sich die erfindungsgemäße Buchse dadurch aus, dass das Innengewinde innerhalb des ersten Umlaufs keine Begrenzung in Richtung des ersten Endes aufweist. Dadurch besitzt das Innengewinde nicht bloß einen vorbestimmten engen Eingangsbereich wie es bei einer bekannten Buchse der Fall ist, sondern das Innengewinde ist über seinen gesamten ersten Umlauf, also über einen Winkelbereich von 360°, zugänglich. Aus diesem Grund kann man sagen, dass der erste Umlauf des Innengewindes freigestellt ist.

In einer bevorzugten Ausführungsform weist die Buchse im Bereich des ersten Umlaufs einen Innendurchmesser auf, der dem Innendurchmesser der Buchse im Bereich eines zweiten Umlaufs plus der doppelten Tiefe der Nut entspricht. Dies hat den Vorteil, dass ein störungsfreier Übergang des ersten Umlaufs des Innengewindes in den zweiten Umlauf des Innengewindes erfolgen kann.

In einer weiteren bevorzugten Ausführungsform bildet die Begrenzung in Richtung des zweiten Endes am Ende des ersten Umlaufs mit der Begrenzung in Richtung des zweiten Endes am Anfang des zweiten Umlaufs einen Vorsprung. Dieser Vorsprung ist vorzugsweise keilförmig ausgebildet. Ein derartiger Vorsprung hat den Vorteil, dass es beim Übergang vom ersten in den zweiten Umlauf des Innengewindes keine störende Fläche gibt, gegen den der Vorsprung des Gewindeabschnitts eines Befestigungselements stoßen kann.

In einer weiteren bevorzugten Ausführungsform ist die Buchse zylindrisch. Beispielsweise kann ein Körper der Buchse ein zylindrischer Körper sein. Ein Vorteil, der sich hieraus ergibt, ist dass die Buchse einfach in ein Bohrloch eingesetzt werden kann.

Erfindungsgemäß besteht die Buchse zumindest teilweise aus Kunststoff. Dies hat den Vorteil, dass die Buchse unter Krafteinwirkung leicht verformbar ist und so einfach eine form- und kraftschlüssige Verbindung zwischen der Buchse und dem Untergrund hergestellt werden kann. Beispielsweise kann die Buchse durch das Eindringen eines Befestigungselements radial gegen den Untergrund gedrückt werden.

Weiter wird die vorliegende Aufgabe auch durch ein erfindungsgemäßes System gelöst, wobei das System eine Buchse und ein Befestigungselement aufweist. Die Buchse besitzt ein Innengewinde, das teilweise durch eine spiralförmige Nut in der Buchse gebildet wird, wobei die Nut Begrenzungen in Richtung eines ersten und eines zweiten Endes der Buchse aufweist. Darüber hinaus weist das Innengewinde im Bereich eines ersten Umlaufs benachbart zum ersten Ende der Buchse eine Begrenzung in Richtung des zweiten Endes auf, aber keine Begrenzung in Richtung des ersten Endes.

In einer weiteren bevorzugten Ausführungsform kann die Begrenzung in Richtung des zweiten Endes der Buchse am Ende des ersten Umlaufs mit dem Anfang der Begrenzung in Richtung des zweiten Endes der Buchse einen keilförmigen Vorsprung ausbilden.

Darüber hinaus kann die Buchse des Systems nach jeder der hierin beschriebenen bevorzugten Ausführungsformen der unabhängig von einem System beschriebenen erfindungsgemäßen Buchse ausgebildet sein.

Weiter wird die vorliegende Aufgabe auch durch ein erfindungsgemäßes Spindelwerkzeug zur Herstellung einer erfindungsgemäßen Buchse gelöst. Das erfindungsgemäße Spindelwerkzeug weist einen zylindrischen Körper mit einem ersten Ende und einem zweiten Ende auf.

Der zylindrische Körper weist weiter einen ersten Bereich auf mit einem an der Außenseite des ersten Bereichs ausgebildeten ersten spiralförmigen Vorsprung zum Bilden einer spiralförmigen Nut eines Innengewindes in einer Buchse. Der erste Bereich ist am ersten Ende des zylindrischen Körpers angeordnet. Der spiralförmige Vorsprung ist durch Flanken begrenzt, wobei eine erste Flanke dem ersten Ende des zylindrischen Körpers zugewandt ist und eine zweite Flanke dem zweiten Ende des zylindrischen Körpers zugewandt ist.

Weiter weist der zylindrische Körper einen zweiten Bereich auf mit einem größeren Durchmesser als der erste Bereich zum Bilden eines vergrößerten Innendurchmessers in der Buchse. Der zweite Bereich ist in Richtung des zweiten Endes des zylindrischen Körpers angeordnet.

Weiter weist der zylindrische Körper einen Übergangsbereich auf, der zwischen dem ersten Bereich und dem zweiten Bereich angeordnet ist. Der Übergangsbereich weist einen zweiten spiralförmigen Vorsprung auf, der in einem vollständigen Umlauf um den zylindrischen Körper verläuft und die gleiche Steigung besitzt wie der erste spiralförmige Vorsprung. Der zweite spiralförmige Vorsprung weist eine Flanke auf, die dem ersten Ende des zylindrischen Körpers zugewandt ist und formschlüssig in die erste Flanke des ersten Vorsprungs übergeht. Der zweite spiralförmige Vorsprung weist hinsichtlich des zweiten Endes des zylindrischen Körpers keine Begrenzung auf.

In einer bevorzugten Ausführungsform begrenzt der zweite spiralförmige Vorsprung eine keilförmige Ausnehmung innerhalb des Übergangsbereichs. Der Vorteil einer derartigen keilförmigen Ausnehmung ist, dass das Spindelwerkzeug an der Position des Übergangsbereichs durch die keilförmige Ausnehmung einen keilförmigen Vorsprung in das Innengewinde einer Buchse schneiden kann.

In einer weiteren bevorzugten Ausführungsform weist der zweite spiralförmige Vorsprung zwei Enden auf, wobei das erste Ende den formschlüssigen Übergang der Flanke des zweiten Vorsprungs in die erste Flanke des ersten Vorsprungs bildet und wobei eine Verbindungslinie zwischen dem ersten Ende des zweiten spiralförmigen Vorsprungs und dem zweiten Ende des zweiten spiralförmigen Vorsprungs die keilförmige Ausnehmung bildet. Ein Vorteil dieser Gestaltung ist, dass sich beim Schneiden eines Innengewindes in eine Buchse keine störenden Kanten ergeben, die einem späteren Eindrehen eines Befestigungselements in die Buchse entgegenstehen könnten.

Die beigefügten Zeichnungen veranschaulichen die erfindungsgemäße Buchse und das System bestehend aus Buchse und Befestigungselement sowie das erfindungsgemäße Spindelwerkzeug anhand von Ausführungsbeispielen im Vergleich entsprechenden Elementen aus dem Stand der Technik. Es zeigen:

Figur 1    Querschnitt einer Buchse wie sie im Stand der Technik bekannt ist,

Figur 2    Querschnitt einer Ausführungsform einer erfindungsgemäßen Buchse,

Figur 3a, 3b    perspektivische Darstellungen einer längsseitig durchgeschnittenen Buchse gemäß einer Ausführungsform einer erfindungsgemäßen Buchse,

Figur 4a, 4b    Detailansicht der Begrenzungen einer Nut einer aus dem Stand der Technik bekannten Buchse beziehungsweise einer erfindungsgemäßen Buchse,

Figur 5a-c    Darstellung des Einbringens eines Befestigungselements in eine erfindungsgemäße Buchse, und

Figur 6    Darstellung einer Ausführungsform eines erfindungsgemäßen Spindelwerkzeugs.

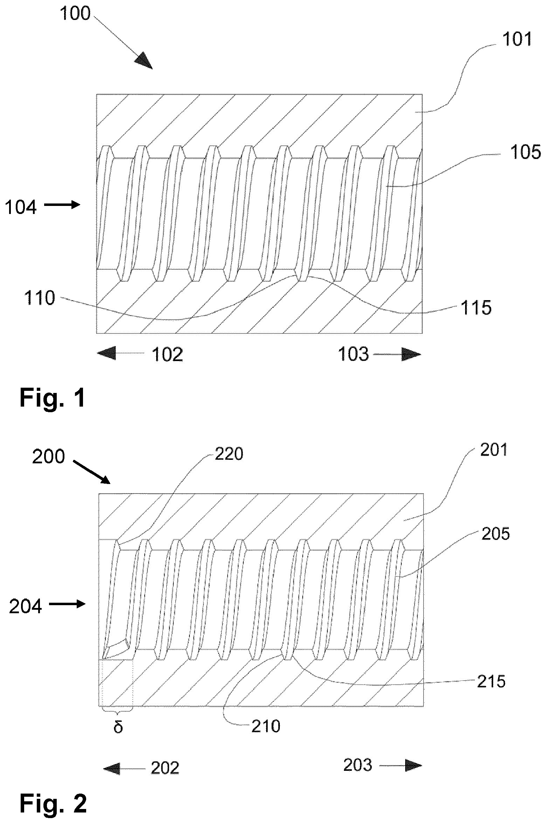

Figur 1 zeigt einen Querschnitt einer bekannten Buchse 100. Die Buchse 100 besitzt einen Körper 101 mit einem ersten Ende 102 und einem zweiten Ende 103. Eine Bohrung 104 erstreckt sich durch den Körper 101 von dem ersten Ende 102 zu dem zweiten Ende 103. Die Bohrung 104 besitzt ein Innengewinde, das sich bei der bekannten Buchse 100 vom ersten Ende 102 bis zum zweiten Ende 103 innerhalb der Bohrung 104 erstreckt. Das Innengewinde wird durch eine spiralförmige Nut 105 gebildet. Die Nut 105 bildet dabei eine Vertiefung im Körper 101 der Buchse 100 innerhalb der Bohrung 104. Die Nut 105 kann beispielsweise mittels eines Spindelwerkzeugs in die Bohrung 104 der Buchse 100 eingeschnitten werden.

Im Fall der bekannten Buchse 100 weist die Nut 105 entlang der gesamten Länge der Bohrung im Wesentlichen die gleiche Tiefe auf. Die Steigung der sich spiralförmig entlang der Bohrung 104 erstreckenden Nut 105, d.h. die Steigung des Innengewindes, ist über die gesamte Länge der Bohrung 104 gleich.

Die Nut 105 weist Begrenzungen 110, 115 auf. Diese Begrenzungen 110, 115 können auch als seitliche Begrenzungen 110, 115 bezeichnet werden, da sie ausgehend von der Längserstreckung der Nut 105 die Nut 105 zu beiden Seiten hin begrenzt. Da sich die Nut 105 spiralförmig in der Buchse erstreckt, begrenzt eine Begrenzung 110 die Nut in Richtung des ersten Endes 102 der Buchse 100 während eine Begrenzung 115 die Nut in Richtung des zweiten Endes 103 der Buchse 100 begrenzt.

Die Begrenzungen 110, 115 werden durch Abschnitte des Körpers 101 der Buchse 100 gebildet. Wird die Nut 105 in die Buchse 100 beispielsweise in den Körper hineingeschnitten, bilden die Schneidkanten die Begrenzungen 110, 115 der Nut 105. In dem Fall kann man sagen, dass die Nut durch eine Ausnehmung gebildet wird, deren Wände die Begrenzungen 110, 115 bilden. Grundsätzlich kann man aber auch sagen, dass die Nut 105 durch Vorsprünge gebildet wird, die zwischen zwei Umläufen der Nut 105 angeordnet sind. In dem Fall bilden die Wände des Vorsprungs die Begrenzungen 110, 115. In der in Figur 1 gezeigten Darstellung werden die Begrenzungen 110, 115 durch die Flanken des Innengewindes gebildet.

Wird ein Befestigungselement mit einem Gewindeabschnitt in die Bohrung der Buchse 100 eingebracht, beispielsweise an der Position des ersten Endes in Richtung des zweiten Endes, kann der Gewindeabschnitt des Befestigungselements in die Nut 105 eingreifen und sich so in die Buchse 100 hineindrehen. Im Fall der bekannten Buchse 100 ist der Eingang in die Nut 105 am ersten Ende der Buchse 100 nur über einen engen Winkelbereich möglich. Trifft der Gewindeabschnitt des Befestigungselements nicht innerhalb dieses engen Winkelbereichs auf die Nut 105, kann der Gewindeabschnitt des Befestigungselements sich nicht in die Nut 105 und damit nicht in das Innengewinde der Buchse 100 eindrehen. Stattdessen kann das Befestigungselement abrutschen, die Buchse 100 tiefer in ein Bohrloch schieben oder im schlimmsten Fall die Buchse 100 beschädigen.

Figur 2 zeigt einen Querschnitt eines Ausführungsbeispiels einer erfindungsgemäßen Buchse 200. Die erfindungsgemäße Buchse 200 besitzt einen Körper 201 mit einem ersten Ende 202 und einem zweiten Ende 203. Eine Bohrung 204 erstreckt sich durch den Körper 201 von dem ersten Ende 202 zu dem zweiten Ende 203. Die Bohrung 204 besitzt ein Innengewinde. Das Innengewinde wird teilweise durch eine spiralförmige Nut 205 gebildet. Wie oben im Zusammenhang mit dem Stand der Technik erläutert, kann die Nut 205 beispielsweise als eine Ausnehmung im Körper 201 der Buchse 200 im Bereich der Bohrung 204 angesehen werden.

Bei der erfindungsgemäßen Buchse 200 bildet die Nut 205 zumindest teilweise das Innengewinde der Buchse 200 und besitzt Begrenzungen 210, 215 in Richtung des ersten Endes 202 und des zweiten Endes 203 der Buchse 200, ähnlich den Begrenzungen 110, 115 der Nut 105 der Buchse 100.

Das Innengewinde der erfindungsgemäßen Buchse 200 weist mehrere Umläufe auf, wobei diese auch als Gewindegänge bezeichnet werden können. Die Anzahl der Umläufe bei der Buchse kann mit N bezeichnet werden, während der Abstand zwischen zwei Umläufen, wie in Figur 2 verdeutlicht, mit der Strecke $\delta$ bezeichnet werden kann. $\delta$ kann auch als die Steigung des Innengewindes oder als Ganghöhe bezeichnet werden.

Wie aus Figur 2 ersichtlich, unterscheidet sich die erfindungsgemäße Buchse 200 von der in Figur 1 gezeigten Buchse 100 dadurch, dass im Bereich des ersten Umlaufs des Innengewindes die Nut 205 in Richtung des ersten Endes 202 keine Begrenzung aufweist.

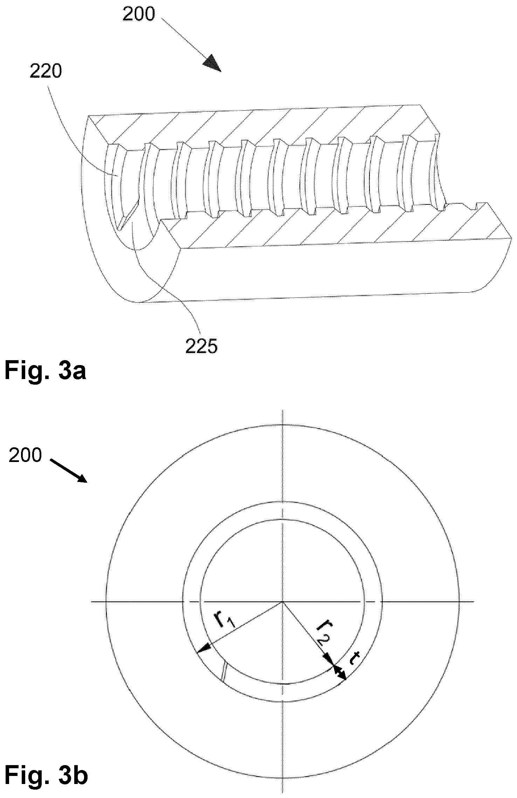

Dieser Unterschied wird auch in der perspektivischen Ansicht der aufgeschnittenen Buchse in Figur 3a gezeigt.

Ausgehend von dem ersten Ende 202 der Buchse 200 kann es zuerst einen Bereich ohne Innengewinde geben. Dieser Bereich weist dementsprechend auch keine Begrenzungen auf. In diesem Bereich gibt es keinen Vorsprung oder anders ausgedrückt befindet sich in diesem Bereich die Mantelfläche der Bohrung in der gleichen Lage wie der Boden in der Ausnehmung der Nut 205.

Die erfindungsgemäße Buchse weist immer einen Bereich auf, bei dem das Innengewinde nur eine Begrenzung in Richtung des zweiten Endes aufweist. Dies wird am Beispiel der in den Figuren 3a und 3b gezeigten Ausführungsform erläutert.

Die in den Figuren 3a, 3b gezeigte Buchse 200 weist eine Bohrung mit einem kreisförmigen Querschnitt auf. Hierbei können zwei Radien unterschieden werden. Der Radius r1 bezeichnet den Radius, der bis auf den Boden der Nut geht, während der Radius r2 den Radius bezeichnet, der auf dem die Begrenzung der Nut bildenden Vorsprung endet. Die Tiefe der Nut ist in Figur 3b mit t bezeichnet, so dass in der vorliegenden Ausführungsform

$$r2 + t = r1$$

gilt. Dies ist in der Figur 3b veranschaulicht.

Mit Blick auf diese Darstellung in Figur 3a wird der Vorteil des Bereichs des ersten Umlaufs des Innengewindes, der nur eine Begrenzung 220 in Richtung des zweiten Endes der Buchse 200 besitzt, deutlich.

Wenn ein Befestigungselement mit einem Gewindeabschnitt an der Position des ersten Endes der Buchse 200 in die Bohrung eingeführt wird, kann der Gewindeabschnitt des Befestigungselements an jeder Position des ersten Umlaufs des Innengewindes auf die Begrenzung 220 treffen. Dadurch ist es möglich, dass der Gewindeabschnitt des Befestigungselements für jede relative Winkelposition zwischen Gewindeabschnitt und Innengewinde auf die Begrenzung 220 treffen und sich in das Innengewinde der Buchse eindrehen kann.

Vorzugsweise ist der Vorsprung 225 am Übergang des ersten Umlaufs des Innengewindes zum zweiten Umlauf des Innengewindes keilförmig ausgestaltet. Diese Keilform hat den Vorteil, dass am Übergang der Begrenzung 220 des ersten Umlaufs des Innengewindes in die Nut 205 des zweiten Umlaufs des Innengewindes keine Fläche besteht, die ein Hindernis für das Eindrehen eines Gewindeabschnittes des Befestigungselements bilden kann.

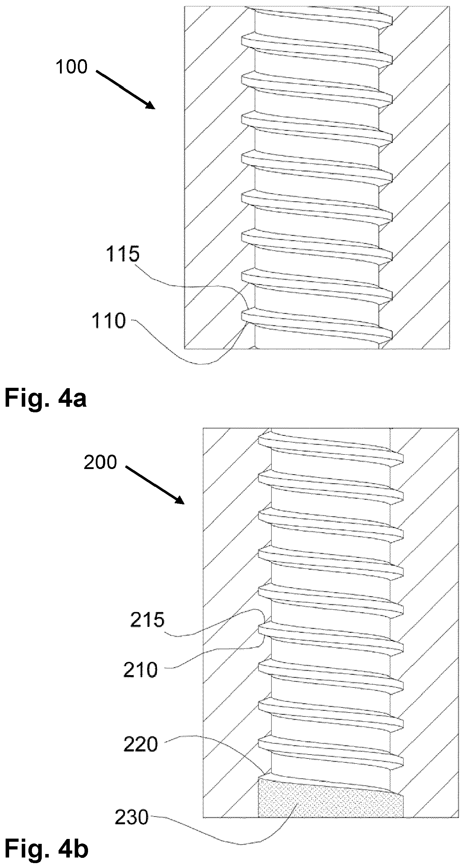

Die Figuren 4a und 4b zeigen eine Gegenüberstellung von Detailansichten der Begrenzungen einer Nut einer aus dem Stand der Technik bekannten Buchse 100 und dem freigestellten ersten Umlauf einer erfindungsgemäßen Buchse 200.

Figur 4a zeigt die Buchse 100 aus Figur 1 und eine Detailansicht der Begrenzungen 110, 115 der Nut 105 an einem ersten Ende 102 der Buchse 100. Die Begrenzungen 110, 115, die beispielsweise durch Gewindeflanken gebildet werden können, begrenzen die Auftreffposition des Gewindeabschnitts eines Befestigungselements auf die Bohrung der Buchse 100. Nur wenn der Gewindeabschnitt innerhalb eines engen Eingangsbereichs auf die Nut 105 trifft, steht keine Begrenzung 110 in Richtung des ersten Endes der Buchse 100 einem Eindringen des Gewindeabschnitts in die Nut 105 im Weg und ein Eindringen ist möglich.

In Figur 4b ist eine Detailansicht eines Ausführungsbeispiels einer erfindungsgemäßen Buchse 200 gezeigt. Im Bereich des ersten Umlaufs des Innengewindes besitzt die Nut 205 eine Begrenzung 220 in Richtung des zweiten Endes, ist jedoch hinsichtlich des ersten Endes freigestellt. Dies ist in Figur 4b dargestellt durch den gepunkteten Bereich 230, der gegenüber einer bekannten Buchse 100 bei der erfindungsgemäßen Buchse 200 nicht vorhanden ist.

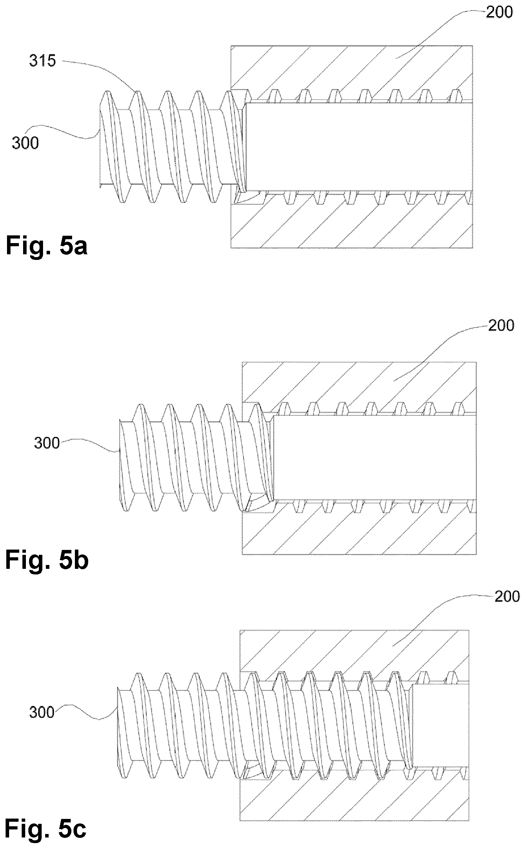

Die Figuren 5a bis 5c zeigen eine Darstellung eines Einbringvorgangs eines Befestigungselements 300 in eine erfindungsgemäße Buchse 200.

Das Befestigungselement 300 besitzt einen Vorsprung 315, der einen Gewindeabschnitt des Befestigungselements 300 bildet. In Figur 5a ist gezeigt, wie der Gewindeabschnitt 315 in einer beliebigen Position auf den ersten Umlauf des Innengewindes der Buchse 200 trifft und sich eindreht. In Figur 5b ist gezeigt, wie das Befestigungselement sich innerhalb des ersten Umlaufs des Innengewindes der Buchse bewegt und Figur 5c zeigt schließlich wie der Gewindeabschnitt weiter in das Innengewinde eingedreht ist und der Vorsprung 315 formschlüssig in die Nut 205 des Innengewindes der Buchse 200 eingreift.

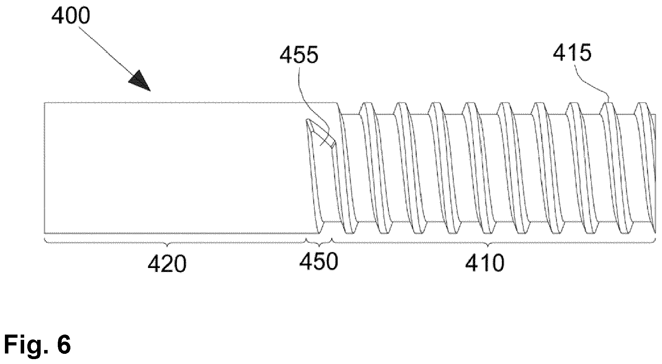

Die Figur 6 zeigt eine Darstellung einer Ausführungsform eines erfindungsgemäßen Spindelwerkzeugs 400.

Das Spindelwerkzeug 400 besitzt einen zylindrischen Körper mit einem ersten Ende und einem zweiten Ende. Das Spindelwerkzeug besitzt einen ersten Bereich 410 angeordnet am ersten Ende und einen zweiten Bereich 420 angeordnet in Richtung des zweiten Endes. Der erste Bereich 410 besitzt einen an der Außenseite des ersten Bereichs 410 ausgebildeten ersten spiralförmigen Vorsprung 415. Der Vorsprung 415 ist geeignet zum Bilden einer spiralförmigen Nut eines Innengewindes in einer Buchse, beispielsweise der Nut 205 einer erfindungsgemäßen Buchse 200. Der spiralförmige Vorsprung 415 ist dabei durch Flanken begrenzt, wobei eine erste Flanke dem ersten Ende des zylindrischen Körpers zugewandt ist und eine zweite Flanke dem zweiten Ende des zylindrischen Körpers zugewandt ist. Der erste Bereich 410 besitzt zwischen den Gewindegängen des spiralförmigen Vorsprungs einen ersten Durchmesser.

Das Spindelwerkzeug 400 besitzt weiter einen Bereich 420, der einen größeren Durchmesser als der erste Bereich aufweist und geeignet ist zum Bilden eines vergrößerten Innendurchmessers in der Buchse. Beispielsweise kann der Durchmesser des zweiten Bereichs 420 gleich dem Durchmesser des ersten Bereichs 410 plus der doppelten Höhe des Vorsprungs 415 sein.

Das Spindelwerkzeug 400 besitzt weiter einen Übergangsbereich 450 angeordnet zwischen dem ersten Bereich 410 und dem zweiten Bereich 420. Der Übergangsbereich 450 weist einen zweiten spiralförmigen Vorsprung auf, der in einem vollständigen Umlauf um den zylindrischen Körper verläuft und die gleiche Steigung besitzt wie der erste spiralförmige Vorsprung 415. Der zweite spiralförmige Vorsprung besitzt eine Flanke, die dem ersten Ende des zylindrischen Körpers zugewandt ist und formschlüssig in die erste Flanke des ersten Vorsprungs 415 übergeht. In Richtung des zweiten Endes 420 des Spindelwerkzeugs 400 weist der Übergangsbereich 450 keine Begrenzung auf. Der Übergangsbereich geht formschlüssig in den zweiten Bereich 420 mit dem gegenüber dem ersten Bereich 410 vergrößerten Durchmesser über.

Wie in Figur 6 dargestellt ist, besitzt der Übergangsbereich 450 eine keilförmige Ausnehmung 455. Diese keilförmige Ausnehmung kann dazu dienen einen keilförmigen Vorsprung am Ende des ersten Umlaufs des Innengewindes einer Buchse 200 zu erzeugen.

Die obige Beschreibung enthält Ausführungsbeispiele von einer oder mehr Ausführungsformen der Erfindung. Selbstverständlich ist es nicht möglich jede denkbare Kombination der erfindungsgemäßen Komponenten und Verfahren in den zuvor genannten Ausführungsbeispielen zu beschreiben. Vielmehr wird ein Fachmann erkennen, dass es vielzählige weitere Kombinationen von weiteren Ausführungsformen gibt. Entsprechend sollen die beschriebenen Ausführungsbeispiele alle diese weiteren Kombinationen, Modifikationen, Variationen und Ausführungsformen umfassen, die unter den Geltungsbereich der angefügten Ansprüche fallen.

## Patentansprüche

1. Eine Buchse (200) zur Aufnahme zumindest eines Teilbereichs eines Befestigungselements (300),

   mit einem Innengewinde, das teilweise durch eine spiralförmige Nut (205) in der Buchse (200) gebildet wird, wobei die Nut (205) Begrenzungen in Richtung eines ersten und eines zweiten Endes (210, 215) der Buchse (200) aufweist, und
   das Innengewinde im Bereich eines ersten Umlaufs benachbart zum ersten Ende (202) der Buchse (200) eine Begrenzung in Richtung des zweiten Endes (203), aber keine Begrenzung in Richtung des ersten Endes (202) aufweist,
   wobei die Buchse (200) zumindest teilweise aus einem Kunststoff besteht.

2. Die Buchse (200) nach Anspruch 1, wobei die Buchse (200) im Bereich des ersten Umlaufs des Innengewindes einen Innendurchmesser aufweist, der dem Innendurchmesser der Buchse im Bereich eines zweiten Umlaufs plus der doppelten Tiefe der Nut (205) entspricht.

3. Die Buchse (200) nach einem der vorherigen Ansprüche, wobei die Begrenzung (215) in Richtung des zweiten Endes (203) am Ende des ersten Umlaufs mit der Begrenzung (215) in Richtung des zweiten Endes (203) am Anfang des zweiten Umlaufs einen keilförmigen Vorsprung (225) ausbildet.

4. Die Buchse (200) nach einem der vorherigen Ansprüche, wobei die Buchse (200) zylindrisch ist.

5. Ein System aufweisend:

   eine Buchse (200) mit

   einem Innengewinde, das teilweise durch eine spiralförmige Nut (205) in der Buchse (200) gebildet wird, wobei die Nut (205) Begrenzungen (210, 215) in Richtung eines ersten und eines zweiten Endes (202, 203) der Buchse (200) aufweist, und
   das Innengewinde im Bereich eines ersten Umlaufs benachbart zum ersten Ende (202) der Buchse (200) eine Begrenzung (215) in Richtung des zweiten Endes (203), aber keine Begrenzung in Richtung des ersten Endes (202) aufweist,
   wobei die Buchse (200) zumindest teilweise aus einem Kunststoff besteht; und

   ein Befestigungselement (300) aufweisend:
   zumindest einen Gewindeabschnitt (315), wobei der zumindest eine Gewindeabschnitt einen Durchmesser besitzt, der dem Durchmesser des Innengewindes der Buchse (200) entspricht.

6. System nach Anspruch 5, wobei die Begrenzung (215) in Richtung des zweiten Endes (203) der Buchse (200) am Ende des ersten Umlaufs mit dem Anfang der Begrenzung (215) in Richtung des zweiten Endes (203) der Buchse (200) einen keilförmigen Vorsprung (225) ausbildet.

7. Ein Spindelwerkzeug (400) zur Herstellung einer Buchse nach Anspruch 1, aufweisend:
   einen zylindrischen Körper mit einem ersten Ende und einem zweiten Ende, wobei der zylindrische Körper aufweist:

   einen ersten Bereich (410) mit einem an der Außenseite des ersten Bereichs (410) ausgebildeten ersten spiralförmigen Vorsprung (415) zum Bilden einer spiralförmigen Nut eines Innengewindes in einer Buchse, wobei der spiralförmige Vorsprung durch Flanken begrenzt ist, wobei eine erste Flanke dem ersten Ende des zylindrischen Körpers zugewandt ist und eine zweite Flanke dem zweiten Ende des zylindrischen Körpers zugewandt ist,
   einen zweiten Bereich (420) mit einem größeren Durchmesser als dem ersten Bereich (410) zum Bilden eines vergrößerten Innendurchmessers in der Buchse, und
   einen Übergangsbereich (450) angeordnet zwischen dem ersten Bereich (410) und dem zweiten Bereich (420), wobei der Übergangsbereich (450) einen zweiten spiralförmigen Vorsprung (415) aufweist, der in einem vollständigen Umlauf um den zylindrischen Körper verläuft und die gleiche Steigung besitzt wie der erste spiralförmige Vorsprung (415), wobei der zweite spiralförmige Vorsprung eine Flanke aufweist, die dem ersten Ende des zylindrischen Körpers zugewandt ist und formschlüssig in die erste Flanke des ersten Vorsprungs übergeht und wobei der zweite spiralförmige Vorsprung hinsichtlich des zweiten Endes des zylindrischen Körpers keine Begrenzung aufweist.

8. Spindelwerkzeug (400) nach Anspruch 7, wobei der zweite spiralförmige Vorsprung eine keilförmige Ausnehmung (455) innerhalb des Übergangsbereichs begrenzt.

9. Spindelwerkzeug (400) nach Anspruch 8, wobei der zweite spiralförmige Vorsprung zwei Enden aufweist und das erste Ende den formschlüssigen Übergang der Flanke des zweiten Vorsprungs in die erste Flanke des ersten Vorsprungs bildet und wobei eine Verbindungslinie zwischen dem ersten Ende des zweiten spiralförmigen Vorsprungs und dem zweiten Ende des zweiten spiralförmigen Vorsprungs die keilförmige Ausnehmung (455) bildet.

**Claims**

1. A socket (200) for receiving at least a portion of a fastening element (300), with an inner thread, which is formed at least partially by a helical notch (205) within the socket (200), wherein the notch (205) comprises restrictions (210, 215) in the direction of a first and a second end of the socket (200), and

   wherein the inner thread, in the area of a first turn adjacent to the first end (202) of the socket (200), comprises a restriction in the direction of the second end (203), but no restriction in the direction of the first end (202), wherein the socket (200) at least partially consists of a plastic material.

2. The socket (200) according to claim 1, wherein the socket (200), in the area of the turn of the inner thread, comprises an inner diameter, which corresponds to the inner diameter of the socket in the area of a second turn of the inner thread plus two times the depth of the notch (205).

3. The socket (200) according to any of the aforementioned claims, wherein the restriction (215) in the direction of the second end (203) at the end of the first turn of the inner thread together with the restriction (215) in the direction of the second end (203) at the beginning of the second turn of the inner thread forms a wedge-shaped protrusion (225).

4. The socket (200) according to any of the aforementioned claims, wherein the socket (200) is cylindrical.

5. A system comprising:

   a socket (200) with

   an inner thread, which is formed at least partially by a helical notch (205) within the socket (200), wherein the notch (205) comprises restrictions (210, 215) in the direction of a first and a second end (202, 203) of the socket (200), and wherein the inner thread, in the area of a first turn adjacent to the first end (202) of the socket (200), comprises a restriction (215) in the direction of the second end (203), but no restriction in the direction of the first end (202), wherein the socket (200) at least partially consists of a plastic material; and

   a fastening element (300) comprising: at least one threaded portion (315), wherein the at least one threaded portion (315) comprises a diameter, which corresponds to the diameter of the inner thread of the socket (200).

6. The system according to claim 5, wherein the restriction (215) in the direction of the second end (203) of the sleeve (200) at the end of the first turn of the inner thread together with the restriction (215) in the direction of the second end (203) of the sleeve (200) at the beginning of the second turn of the inner thread forms a wedge-shaped protrusion (225).

7. A mandrel (400) for manufacturing a socket according to claim 1, comprising: a cylindrical body with a first end and a second end, wherein the cylindrical body comprises:

   a first portion (410) with a first helical protrusion (415) formed at the outer surface of the first portion (410) for forming a helical notch of an inner thread in a socket, wherein the helical protrusion is restricted by thread flanks, wherein a first thread flank faces towards the first end of the cylindrical body and a second thread flank faces towards the second end of the cylindrical body, a second portion (420) having a greater diameter than the first portion (410) for forming an enlarged inner diameter within the socket, and a transition portion (450) arranged between the first portion (410) and the second portion (420), wherein the transition portion (450) comprises a second helical protrusion (415), which extends along the cylindrical body for an entire turn and comprises the same pitch as the first helical protrusion (415), wherein the second helical protrusion comprises a thread flank, which faces towards the first end of the cylindrical body and transitions form-fittingly to the first thread flank of the first protrusion and wherein the second helical protrusion does not comprise a restriction in the direction of the second end of the cylindrical body.

**8.** Mandrel (400) according to claim 7, wherein the second helical protrusion restricts a wedge-shaped recess (455) within the transition portion.

**9.** Mandrel (400) according to claim 8, wherein the second helical protrusion comprises two ends and the first end forms the form-fitting transition of the thread flank of the second protrusion to the first thread flank of the first protrusion and wherein a connection line between the first end of the second helical protrusion and the second end of the second helical protrusion forms the wedge-shaped recess (455).

## Revendications

**1.** Une douille (200) pour la réception d'au moins une zone partielle d'un élément de fixation (300),

avec un taraudage, qui est formé en partie par une rainure (205) en forme de spirale dans la douille (200), dans laquelle la rainure (205) comporte des délimitations en direction d'une première et d'une deuxième extrémité (210, 215) de la douille (200), et
le taraudage comporte dans la zone d'une première périphérie au voisinage de la première extrémité (202) de la douille (200) une délimitation en direction de la deuxième extrémité (203), mais aucune délimitation en direction de la première extrémité (202),
dans laquelle la douille (200) est constituée au moins en partie d'une matière plastique.

**2.** La douille (200) selon la revendication 1, dans laquelle la douille (200) comporte dans la zone de la première périphérie du taraudage un diamètre intérieur qui correspond au diamètre intérieur de la douille dans la zone d'une deuxième périphérie plus le double de la profondeur de la rainure (205).

**3.** La douille (200) selon l'une quelconque des revendications précédentes, dans laquelle la délimitation (215) en direction de la deuxième extrémité (203) réalise à l'extrémité de la première périphérie une saillie (225) en forme de coin avec la délimitation (215) en direction de la deuxième extrémité (203) au début de la deuxième périphérie.

**4.** La douille (200) selon l'une quelconque des revendications précédentes, dans laquelle la douille (200) est cylindrique.

**5.** Un système comprenant :

une douille (200) avec

un taraudage, qui est formé en partie par une rainure (205) en forme de spirale dans la douille (200), dans lequel la rainure (205) comporte des délimitations (210, 215) en direction d'une première et d'une deuxième extrémité (202, 203) de la douille (200), et le taraudage comporte dans la zone d'une première périphérie au voisinage de la première extrémité (202) de la douille (200) une délimitation (215) en direction de la deuxième extrémité (203), mais aucune délimitation en direction de la première extrémité (202),
dans lequel la douille (200) est constituée au moins en partie d'une matière plastique ; et

un élément de fixation (300) comprenant : au moins une section filetée (315), dans lequel l'au moins une section filetée possède un diamètre qui correspond au diamètre du taraudage de la douille (200).

**6.** Système selon la revendication 5, dans lequel la délimitation (215) en direction de la deuxième extrémité (203) de la douille (200) à l'extrémité de la première périphérie réalise avec le début de la délimitation (215) en direction de la deuxième extrémité (203) de la douille (200) une saillie (225) en forme de coin.

**7.** Un outil à broche (400) pour la fabrication d'une douille selon la revendication 1, comprenant :
un corps cylindrique avec une première extrémité et une deuxième extrémité, dans lequel le corps cylindrique comporte :

une première zone (410) avec une première saillie (415) en forme de spirale réalisée sur la face extérieure de la première zone (410) pour former une rainure en forme de spirale d'un taraudage dans une douille, dans lequel la saillie en forme de spirale est délimitée par des flancs, dans lequel un premier flanc est tourné vers la première extrémité du corps cylindrique et un deuxième flanc est tourné vers la deuxième extrémité du corps cylindrique,
une deuxième zone (420) avec un diamètre plus

**EP 4 069 986 B1**

grand que la première zone (410) pour former un diamètre intérieur augmenté dans la douille, et

une zone de passage (450) disposée entre la première zone (410) et la deuxième zone (420), dans lequel la zone de passage (450) comporte une deuxième saillie (415) en forme de spirale, qui s'étend dans une périphérie entière autour du corps cylindrique et possède la même pente que la première saillie (415) en forme de spirale, dans lequel la deuxième saillie en forme de spirale comporte un flanc qui est tourné vers la première extrémité du corps cylindrique et passe par coopération de formes dans le premier flanc de la première saillie et dans lequel la deuxième saillie en forme de spirale en ce qui concerne la deuxième extrémité du corps cylindrique ne comporte aucune délimitation.

8. Outil à broche (400) selon la revendication 7, dans lequel la deuxième saillie en forme de spirale délimite un évidement (455) en forme de coin à l'intérieur de la zone de passage.

9. Outil à broche (400) selon la revendication 8, dans lequel la deuxième saillie en forme de spirale comporte deux extrémités et la première extrémité forme le passage par coopération de formes du flanc de la deuxième saillie dans le premier flanc de la première saillie et dans lequel une ligne de liaison entre la première extrémité de la deuxième saillie en forme de spirale et la deuxième extrémité de la deuxième saillie en forme de spirale forme l'évidement (455) en forme de coin.

**Fig. 1**

**Fig. 2**

**Fig. 3a**

**Fig. 3b**

100

115

110

**Fig. 4a**

200

215

210

220

230

**Fig. 4b**

Fig. 5a

Fig. 5b

Fig. 5c

Fig. 6

**EP 4 069 986 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69405048 T2

- EP 0354446 A1